# EUROPÄISCHE PATENTANMELDUNG

(11) **EP 1 703 663 A1**
(43) Veröffentlichungstag der Anmeldung: **20.09.2006**
(21) Anmeldenummer: 05005556.5
(22) Anmeldetag: 15.03.2005
(51) Int. Cl.: H04L 12/22, H04L 12/28, H04L 29/06

(54) **Schleusenelement und Verfahren zur Übertragung von Daten über das Schleusenelement**

(71) Anmelder: Meinel, Christoph, Prof. Dr. sc, 14109 Berlin Wannsee (DE)
(72) Erfinder: Meinel, Christoph, Prof. Dr. sc, 14109 Berlin Wannsee (DE)
(74) Vertreter: Wörz, Volker Alfred

(57) **Zusammenfassung**

Die Erfindung betrifft ein in einer Netzwerkverbindung (3) zwischen einem ersten Netzwerk (1) und einem zweiten Netzwerk (2) angeordnetes Schleusenelement (4), über das eine Datenübertragung zwischen den Netzwerken (1, 2) erfolgt. Das Schleusenelement (4) stellt eine permanente Unterbrechung der Netzwerkverbindung (3) auf Hardware-Ebene sicher. Das Schleusenelement (4) weist mindestens eine Schleusenkammer (11) zum Zwischenspeichern von zu übertragenden Daten auf. Die Schleusenkammer (11) ist zwischen zwei Stellungen umschaltbar, nämlich einer ersten Stellung, in der die Kammer (11) mit dem ersten Netzwerk (1) in Verbindung steht und die Verbindung zu dem zweiten Netzwerk (2) auf Hardware-Ebene unterbrochen ist, und einer zweiten Stellung, in der die Kammer (11) mit dem zweiten Netzwerk (2) in Verbindung steht und die Verbindung zu dem ersten Netzwerk (1) auf Hardware-Ebene unterbrochen ist. Das Schleusenelement (4) weist ein Schaltelement (9) auf, das die Schleusenkammer (11) zu vorgebbaren Zeitpunkten zwischen den zwei Stellungen umschaltet. Um eine Manipulation des Schleusenelementes (4), insbesondere des Schaltelements (9) zu vermeiden, wird vorgeschlagen, dass das Schleusenelement (4) einen Hardware-Zeitgeber (35) aufweist, der die Umschaltzeitpunkte des Schaltelements (9) unabhängig von dem Zustand des übrigen Schleusenelements (4) vorgibt.

## Beschreibung

Die vorliegende Erfindung betrifft ein Schleusenelement, das in einer Netzwerkverbindung zwischen einem ersten Netzwerk und einem zweiten Netzwerk angeordnet ist. Über das Schleusenelement erfolgt eine Datenübertragung zwischen den Netzwerken. Das Schleusenelement stellt eine permanente Unterbrechung der Netzwerkverbindung auf Hardware-Ebene sicher, so dass keine direkte Datenübertragungsverbindung und auch kein direkter Datenübertragungskanal zwischen den Netzwerken besteht. Das Schleusenelement umfasst mindestens eine Schleusenkammer zum Zwischenspeichern von zu übertragenden Daten. Die Schleusenkammer kann zumindest während der Datenübertragung zwischen zwei Stellungen umgeschaltet werden, nämlich einer ersten Stellung, in der die Kammer mit dem ersten Netzwerk in Verbindung steht und die Verbindung zu dem zweiten Netzwerk auf Hardware-Ebene unterbrochen ist, und einer zweiten Stellung, in der die Kammer mit dem zweiten Netzwerk in Verbindung steht und die Verbindung zu dem ersten Netzwerk auf Hardware-Ebene unterbrochen ist. Das Schleusenelement weist ein Schaltelement auf, das die Schleusenkammer zu vorgebbaren Zeitpunkten zwischen den zwei Stellungen umschaltet.

Außerdem betrifft die vorliegende Erfindung ein Verfahren zur Übertragung von Daten zwischen einem ersten Netzwerk und einem zweiten Netzwerk über eine Netzwerkverbindung und ein darin angeordnetes Schleusenelement. Die Netzwerkverbindung ist durch das Schleusenelement auf Hardware-Ebene permanent unterbrochen. Das Schleusenelement weist mindestens eine Schleusenkammer zum Zwischenspeichern von zu übertragenden Daten auf. Die Schleusenkammer wird während der Datenübertragung zwischen zwei Stellungen umgeschaltet, nämlich einer ersten Stellung, in der die Kammer mit dem ersten Netzwerk in Verbindung steht und die Verbindung zu dem zweiten Netzwerk auf Hardware-Ebene unterbrochen ist, und einer zweiten Stellung, in der die Kammer mit dem zweiten Netzwerk in Verbindung steht und die Verbindung zu dem ersten Netzwerk auf Hardware-Ebene unterbrochen ist. Die Schleusenkammer wird von einem Schaltelement des Schleusenelements zu vorgebbaren Zeitpunkten zwischen den zwei Stellungen umgeschaltet.

Das erste Netzwerk ist bspw. ein internes unternehmensweites Rechnernetzwerk. Das zweite Netzwerk ist bspw. das weltumspannende Internet. Die Netzwerkverbindung zwischen den beiden Netzwerken besteht streng genommen zwischen Rechnern oder Computern der beiden Netzwerke. Durch das Schleusenelement kann ein Zugriff durch einen unbefugten Dritten (von einem Rechner des zweiten Netzwerks aus) über das Internet auf das interne Rechnernetzwerk (auf einen Rechner des ersten Netzwerks) wirksam verhindert werden. Die zwischen dem ersten und dem zweiten Netzwerk zu übertragenden Daten werden zunächst an das Schleusenelement übertragen und dort im Hinblick auf eine erhöhte Datensicherheit für den Rechner, für den die Daten bestimmt sind, sicherheitstechnisch verarbeitet. So können bspw. vor der Weiterleitung der Daten infizierte und/oder gefährdete Dateien bearbeitete und/oder entfernt werden oder aber eine Weiterleitung der Daten kann komplett verhindert werden.

Ein Schleusenelement der eingangs genannten Art ist bspw. aus der WO 97/16782 bekannt. Dies hat den Vorteil, dass zu jedem Zeitpunkt der Datenübertragung die Netzwerkverbindung zwischen den beiden Netzwerken unterbrochen ist, so dass ein direkter Zugriff aus dem Internet (aus dem zweiten Netzwerk) heraus auf einen Rechner eines firmeninternen Netzwerks (des ersten Netzwerks) und eine Manipulation des Rechners unmöglich ist. Zu keinem Zeitpunkt während der Datenübertragung besteht zwischen den Netzwerken eine direkte Datenübertragungsverbindung oder ein direkter Datenübertragungskanal.

Nachteilig bei dem bekannten Schleusenelement ist jedoch die Tatsache, dass das Schaltelement, das die mindestens eine Schleusenkammer zu vorgebbaren Zeitpunkten zwischen den zwei Stellungen umschaltet, von einem in dem Schleusenelement angeordneten Rechner gesteuert wird. Es wäre also möglich, wenn in einer der beiden Stellungen des Schaltelements eine direkte Verbindung zwischen dem zweiten Netzwerk (bspw. dem Internet) und dem Schleusenelement besteht, von einem Rechner des Internets aus auf den Rechner im Schleusenelement zuzugreifen und durch Manipulation des Rechners bzw. der darauf abgelegten Software die Steuerung des Schaltelements zu beeinflussen bzw. von dem zweiten Netzwerk aus zu kontrollieren. Das bekannte Schleusenelement ist also manipulierbar und stellt somit keine in jedem Fall zuverlässige Trennung zwischen den zwei Netzwerken dar.

Ausgehend von diesem Stand der Technik liegt der vorliegenden Erfindung die Aufgabe zugrunde, eine Manipulation des Schleusenelements von außerhalb, d.h. von einem der Netzwerke aus, und gleichzeitig einen unberechtigten Zugriff von einem Rechner des ersten Netzwerks auf einen anderen Rechner des zweiten Netzwerks und umgekehrt wirksam und zuverlässig zu verhindern.

Zur Lösung dieser Aufgabe wird ausgehend von dem Schleusenelement der eingangs genannten Art vorgeschlagen, dass das Schleusenelement einen Hardware-Zeitgeber aufweist, der die Umschaltzeitpunkte des Schaltelements unabhängig von dem Zustand des übrigen Schleusenelements vorgibt.

Bei dem aus der EDV bekannten Begriff "Hardware-Zeitgeber" oder auch "Hardware-Timer" handelt es sich um eine Einheit, die in der Regel als ein Bauteil ausgebildet ist, die zur Erzeugung, Steuerung und Überwachung von Prozessen und Taktsignalen dient. Der Hardware-Zeitgeber generiert ein periodisches bzw. zyklisches Signal, aus dem durch Umrechnen der Anzahl der Signale in Sekunden, Minuten und Stunden eine Zeitangabe abgeleitet wird. Hardware-Zeitgeber werden häufig als Echtzeit-Uhr in Computern oder zur Synchronisation von Netzwerken verwendet.

Erfindungsgemäß wird also vorgeschlagen, dass die Umschaltzeitpunkte des Schaltelements nicht durch ein von außerhalb manipulierbares Rechengerät vorgegeben oder ausgelöst werden, sondern von dem Hardware-Zeitgeber, der unabhängig von dem Zustand des restlichen Schleusenelements arbeitet und von außerhalb nicht manipuliert werden kann. Wenn das Schleusenelement aktiviert wird (Power On), fängt der Hardware-Zeitgeber an, ein periodisches oder zyklisches Taktsignal auszugeben und hört damit erst wieder auf, wenn das Schleusenelement heruntergefahren oder deaktiviert (Power Off) wird. Der Hardware-Zeitgeber arbeitet ohne Software und ist deshalb von außerhalb des Schleusenelements, d.h. aus einem der Netzwerke heraus, nicht manipulierbar.

Gemäß einer vorteilhaften Weiterbildung der Erfindung wird vorgeschlagen, dass das Schaltelement mindestens einen mechanischen Schalter aufweist, jeder Schleusenkammer ein Schalter zugeordnet ist und der Hardware-Zeitgeber die Umschaltzeitpunkte des mindestens einen mechanischen Schalters vorgibt. Es werden keine elektronischen oder Halbleiter-Schalter eingesetzt, das diese bspw. durch eine Starkstrom-Attacke von außerhalb angegriffen und in ihrer Funktionsfähigkeit und Zuverlässigkeit beeinträchtigt werden könnten. Mechanische Schalter, bspw. Relais, halten einer solchen Starkstrom-Attacke dagegen stand.

Das Schaltelement umfasst also bspw. so viele Schalter wie Schleusenkammern in dem Schleusenelement vorgesehen sind. Im einfachsten Fall ist lediglich eine Schleusenkammer und auch nur ein mechanischer Schalter vorgesehen. Über die Netzwerkverbindung zu übertragende Daten werden zunächst aus dem einen Netzwerk über den Schalter in die Schleusenkammer übertragen und dort zwischengespeichert. Danach wird umgeschaltet und die Daten werden aus der Schleusenkammer in das andere Netzwerk übertragen. Die Datenübertragung in die umgekehrte Richtung erfolgt dem entsprechend, jedoch erst nachdem die Datenübertragung über das Schleusenelement in die erste Richtung abgeschlossen ist.

In einem anderen Fall sind zwei Schleusenkammern und zwei mechanische Schalter vorgesehen. Über die Netzverbindung zu übertragende Daten können in der einen Richtung aus dem einen Netzwerk über den ersten Schalter in die erste Schleusenkammer übertragen und dort zwischengespeichert werden. Gleichzeitig können in der anderen Richtung Daten aus dem anderen Netzwerk über den zweiten Schalter in die zweite Schleusenkammer übertragen und dort zwischengespeichert werden. Danach wird umgeschaltet und die Daten aus der ersten Schleusenkammer werden über den ersten Schalter in das andere Netzwerk und die Daten aus der zweiten Schleusenkammer werden in das erste Netzwerk übertragen. Auf diese Weise kann eine gleichzeitige Datenübertragung in beide Richtungen über das Schleusenelement realisiert werden.

Gemäß einer bevorzugten Ausführungsform der Erfindung wird vorgeschlagen, dass das Schleusenelement mindestens drei Rechengeräte umfasst, wobei ein erstes Rechengerät mit dem ersten Netzwerk und ein zweites Rechengerät mit dem zweiten Netzwerk in Verbindung steht und je Schleusenkammer mindestens ein drittes Rechengerät vorgesehen ist, das über den mechanischen Schalter der Schleusenkammer mit dem ersten Rechengerät oder mit dem zweiten Rechengerät in Verbindung bringbar ist. Jeder der einer bestimmten Schleusenkammer zugeordneten mechanischen Schalter ist an das der gleichen Schleusenkammer zugeordnete dritte Rechengerät angeschlossen. In den beiden Schaltstellungen kann der Schalter einmal mit dem ersten Rechengerät und dann mit dem zweiten Rechengerät in Verbindung gebracht werden. Auf diese Weise werden Daten, die bspw. von dem ersten Netzwerk in das zweite Netzwerk übertragen werden sollen, von einer Applikation zunächst in dem ersten Rechengerät des ersten Netzwerks zwischengespeichert. Von dort aus werden sie dann, sobald das Schaltelement eine Verbindung zwischen dem ersten Netzwerk und der Schleusenkammer hardwaremäßig hergestellt und die Verbindung zwischen dem ersten Rechengerät und dem dritten Rechengerät aufgebaut worden ist, an das dritte Rechengerät übertragen bzw. von diesem abgeholt. Dann wird umgeschaltet und die Verbindung zwischen dem ersten Netzwerk und der Schleusenkammer unterbrochen. Die Daten werden dann, sobald das Schaltelement eine Verbindung zwischen der Schleusenkammer und dem zweiten Netzwerk hardwaremäßig hergestellt und die Verbindung zwischen dem dritten Rechengerät und dem zweiten Rechengerät aufgebaut worden ist, an das zweite Rechengerät übertragen bzw. von diesem abgeholt.

Vorteilhafterweise gibt der Hardware-Zeitgeber die Umschaltzeitpunkte unabhängig von dem Zustand eines jeden dritten Rechengeräts vor. Das bedeutet also, dass selbst wenn von außerhalb Zugriff auf das dritte Rechengerät erlangt und das Rechengerät oder die darauf abgelegte Software manipuliert wird, eine Beeinträchtigung oder Beeinflussung des Umschaltens durch das Schaltelement nicht zu befürchten ist, ja sogar ganz ausgeschlossen werden kann.

Vorzugsweise umfasst jedes der Rechengeräte einen Prozessor, einen Arbeitsspeicher, einen Massenspeicher und ein zum Ablauf auf dem Rechengerät vorgesehenes Computerprogramm, welches die Datenübertragung zwischen dem ersten Rechengerät und dem mindestens einen dritten Rechengerät und zwischen dem zweiten Rechengerät und dem mindestens einen dritten Rechengerät steuert. Auf jedem der Rechengeräte ist ein eigenes Computerprogramm vorgesehen, welches verschiedene Aufgabe hat. Es muss beispielsweise nach der hardwaremäßigen Herstellung einer Verbindung zwischen dem eigenen und einem anderen Rechengerät durch einen mechanischen Schalter des Schaltelements, im Zusammenspiel mit dem Computerprogramm des anderen Rechengeräts, zu dem die Verbindung hergestellt wurde, Vorkehrungen dafür treffen, dass über die Verbindung auch tatsächlich Daten übertragen werden können. Durch das Computerprogramm müssen also bspw. Verbindungen nach einem bestimmten Protokoll zwischen den beiden Rechengeräten aufgebaut, die Rechengeräte miteinander synchronisiert, und die Daten übertragen werden.

Gemäß einer anderen vorteilhaften Weiterbildung der Erfindung wird vorgeschlagen, dass die Rechengeräte jeweils über eine Datenübertragungsverbindung und eine Statusverbindung mit dem Schaltelement in Verbindung stehen. Über die Datenübertragungsverbindung werden die Daten zwischen den Rechengeräten über das Schaltelement übertragen. Über die Statusverbindungen werden Statusinformationen über den aktuellen Schaltzustand des Schaltelements bzw. des oder der mechanischen Schalter an die Rechengeräte übermittelt. Die Datenübertragungsverbindung ist bspw. als ein Netzwerkkabel ausgebildet, das bspw. zwischen dem Schaltelement und einer Netzwerkkarte der Rechengeräte angeschlossen ist. Die Statusverbindung ist bspw. als ein 9-poliges paralleles Kabel ausgebildet, das zwischen dem Schaltelement und einem Parallelanschluss (parallel port) der Rechengeräte angeschlossen ist.

Gemäß einer weiteren bevorzugten Ausführungsform der Erfindung wird vorgeschlagen, dass das Computerprogramm die Datenübertragung zwischen dem ersten Rechengerät und dem mindestens einen dritten Rechengerät und zwischen dem zweiten Rechengerät und dem mindestens einen dritten Rechengerät in Abhängigkeit von dem aktuellen Schaltstatus des Schaltelements steuert.

Besonders vorteilhaft ist es, wenn das Computerprogramm die Datenübertragung zwischen dem ersten Rechengerät und dem mindestens einen dritten Rechengerät und zwischen dem zweiten Rechengerät und dem mindestens einen dritten Rechengerät für Anwender und Anwendungen transparent steuert. Anwendungen oder Anwendungsprogramme, welche Daten über das Schleusenelement übertragen, bemerken die Anwesenheit des Schleusenelements nicht. Die Computerprogramme, die auf dem ersten Rechengerät und dem zweiten Rechengerät ablaufen, verstecken den aktuellen Verbindungszustand (Verbindung aufgebaut bzw. unterbrochen) zwischen den beiden Netzwerken gegenüber der Anwendung. Die Anwendungen übergeben die zu übertragenden Daten an das erste oder zweite Rechengerät bzw. nehmen die übertragene Daten von dem ersten oder zweiten Rechengerät in Empfang, so als wäre das Schleusenelement gar nicht vorhanden. Das auf dem ersten oder zweiten Rechengerät ablaufende Computerprogramm gibt den Anwendungen geeignete Rückmeldungen, um ihnen unabhängig von dem aktuellen Verbindungszustand eine ordnungsgemäße Datenübertragung zu signalisieren.

Bei einer bevorzugten Ausführungsform weist das Schleusenelement zwei Schleusenkammern und das Schaltelement zwei mechanische Schalter auf. In jeder Schleusenkammer ist ein drittes Rechengerät angeordnet. Dabei werden die zwei mechanischen Schalter zeitsynchron zueinander umgeschaltet, so dass während des Betriebs des Schleusenelements zu jedem Zeitpunkt eines der dritten Rechengeräte mit dem ersten Rechengerät und das andere dritte Rechengerät mit dem zweiten Rechengerät in Verbindung steht. Bei einem derart ausgestalteten Schleusenelement ist es möglich, Daten zeitgleich in beide Richtungen über das Schleusenelement zu übertragen.

Als eine weitere Lösung der Aufgabe der vorliegenden Erfindung wird vorgeschlagen, dass die Umschaltzeitpunkte des Schaltelements unabhängig von dem Zustand des übrigen Schleusenelements gesteuert werden. Bei der Erfindung kann durch keine der Komponenten des Schleusenelements das Umschalten des Schaltelements beeinflusst werden. Selbst wenn also eine Manipulation einer oder mehrerer der Komponenten des Schleusenelements stattfinden würde, hätte dies keine Auswirkungen auf das Umschalten des Schaltelements und eine sichere und zuverlässige Trennung der beiden Netzwerke wäre nach wie vor unter allen Umständen gegeben.

Gemäß einer vorteilhaften Weiterbildung der Erfindung wird vorgeschlagen, dass in jeder Schleusenkammer mindestens ein drittes Rechengerät angeordnet ist und die Umschaltzeitpunkte des Schaltelements unabhängig von dem Zustand des mindestens einen dritten Rechengeräts gesteuert werden. Die Umschaltzeitpunkte werden also nicht - wie beim Stand der Technik - durch ein in der Schleusenkammer angeordnetes drittes Rechengerät des Schleusenelements gesteuert.

Gemäß einer bevorzugten Ausführungsform wird vorgeschlagen, dass die Umschaltzeitpunkte des Schaltelements durch einen Hardware-Zeitgeber des Schleusenelements vorgegeben werden. Der Hardware-Zeitgeber gibt unabhängig von den übrigen Komponenten des Schleusenelements und unabhängig von externen Einflüssen auf das Schleusenelement eine Taktrate ab, aus der die Umschaltzeitpunkte für das Schaltelement bzw. für mechanische Schalter des Schaltelements abgeleitet werden. Der Hardware-Zeitgeber kann an einer beliebigen Stellen in dem Schleusenelement angeordnet sein. Denkbar ist bspw. auch die Anordnung in dem Schaltelement selbst.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Rechnersystem mit einem erfindungsgemäßen Schleusenelement;
- Figur 2: ein erfindungsgemäßes Schleusenelement; und
- Figur 3a und 3b: verschiedene Stellungen eines Schaltelements des erfindungsgemäßen Schleusenelements.

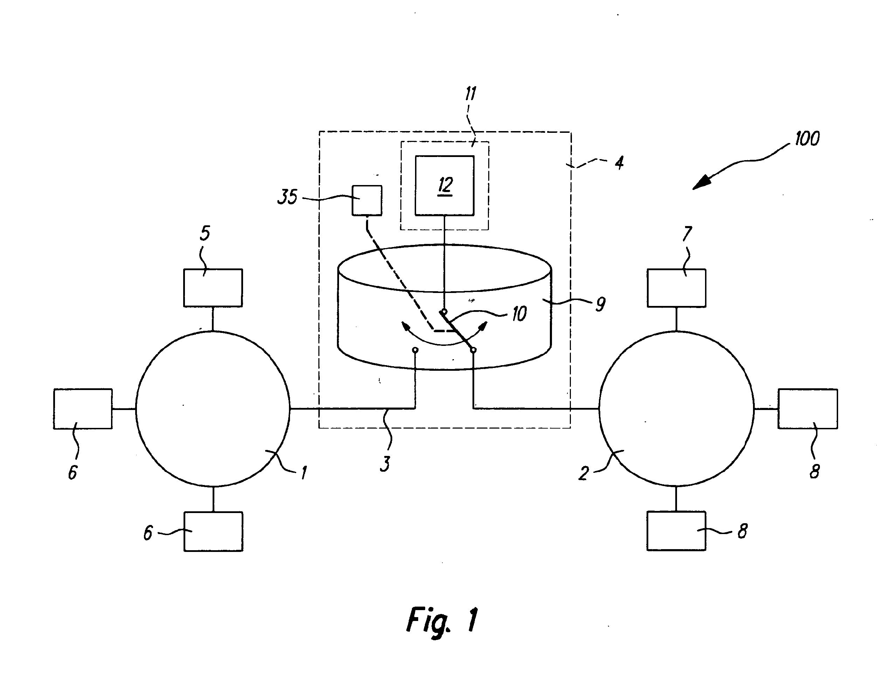

In Fig. 1 ist ein Rechnersystem in seiner Gesamtheit mit dem Bezugszeichen 100 bezeichnet. Es umfasst ein erstes Netzwerk 1 und ein zweites Netzwerk 2, die über eine Netzwerkverbindung 3 zum Zwecke einer Datenübertragung miteinander in Verbindung stehen. In der Netzwerkverbindung 3 ist ein erfindungsgemäßes Schleusenelement 4 angeordnet, durch das die Netzwerkverbindung 3 zu jedem Zeitpunkt, insbesondere während einer Datenübertragung zwischen dem ersten Netzwerk 1 und dem zweiten Netzwerk 2, hardwaremäßig unterbrochen ist, so dass keine direkte Datenübertragungsverbindung und auch kein direkter Datenübertragungskanal zwischen den Netzwerken 1, 2 besteht.

Das erste Netzwerk 1 umfasst einen ersten Rechner 5 sowie weitere Rechner 6. Das zweite Netzwerk 2 umfasst einen zweiten Rechner 7 sowie weitere Rechner 8. Das erste Netzwerk 1 ist bspw. ein internes unternehmensweites Rechnernetzwerk (sog. Intranet). Das zweite Netzwerk 2 ist bspw. das weltumspannende Internet, wobei der zweite Rechner 7 bspw. ein Server des Internet 2 ist.

Das Schleusenelement 4 weist ein hardwaremäßig realisiertes Schaltelement 9 auf. In dem dargestellten Ausführungsbeispiel umfasst das Schaltelement 9 einen mechanischen Schalter 10 in Form eines Relais. Ein mechanischer Schalter 10 kann - im Gegensatz zu elektronischen oder Halbleiter-Schaltern - relativ hohen Strömen bzw. Spannungen standhalten, wie sie bspw. bei Hochspannungs-Attacken auf das Schleusenelement 4 auftreten können. Das Schaltelement 9 bzw. der mechanische Schalter 10 wird zu vorgebbaren Zeitpunkten umgeschaltet. Das Schleusenelement 4 weist einen Hardware-Zeitgeber 35 auf, der die Umschaltzeitpunkte des Schaltelements 9 bzw. des mechanischen Schalters 10 unabhängig von dem Zustand des übrigen Schleusenelements 4 vorgibt.

Das Schleusenelement 4 umfasst außerdem eine Schleusenkammer 11 zum Zwischenspeichern von zu übertragenden Daten. Die Schleusenkammer 11 kann mittels des Schaltelements 9 bzw. des mechanischen Schalters 10 zwischen zwei Stellungen umgeschaltet werden. In einer ersten Stellung steht die Kammer 11 mit dem ersten Netzwerk 1 in Verbindung und ist die Verbindung zu dem zweiten Netzwerk 2 auf Hardware-Ebene unterbrochen. In einer zweiten Stellung (vgl. Figur 1) steht die Kammer 11 mit dem zweiten Netzwerk 2 in Verbindung und ist die Verbindung zu dem ersten Netzwerk 1 auf Hardware-Ebene unterbrochen.

In der Schleusenkammer 11 ist ein drittes Rechengerät 12 angeordnet, das über das Schaltelement 9 bzw. den mechanischen Schalter 10 je nach Schalterstellung entweder mit dem ersten Netzwerk 1 bzw. dem ersten Rechner 5 oder mit dem zweiten Netzwerk 2 bzw. dem zweiten Rechner 7 in Verbindung steht. Bei dem erfindungsgemäßen Schleusenelement 4 ist selbst bei einem Angriff aus einem der Netzwerke 1, 2 heraus, bspw. auf das dritte Rechengerät 12, eine Manipulation des Schaltelements 9 und damit eine Beeinträchtigung der Funktion des Schleusenelements 4 sicher und zuverlässig ausgeschlossen. Das wird unter anderem dadurch erreicht, dass die Umschaltzeiten für das Schaltelement 9 bzw. den mechanischen Schalter 10 nicht von Komponenten des Schleusenelements 4, die von außerhalb des Schleusenelements 4, bspw. aus den Netzwerken 1, 2 heraus, manipuliert werden können, bspw. von dem dritten Rechengerät 12, sondern von einem hardwaremäßig realisierten Zeitgeber (Hardware-Timer) 35 gesteuert bzw. vorgegeben werden. In Figur 1 ist deutlich zu erkennen, dass der Hardware-Timer 35 sowohl räumlich als auch funktional völlig unabhängig ist von dem dritten Rechengerät 12.

Durch das Schleusenelement 4 kann ein Zugriff durch einen unbefugten Dritten (von dem zweiten Rechner 7 aus) über das Internet 2 auf den ersten Rechner 5 in dem Intranet 1 wirksam verhindert werden. Die zwischen dem ersten Rechner 5 und dem zweiten Rechner 7 zu übertragenden Daten werden zunächst an das Schleusenelement 4 und weiter an das dritte Rechengerät 12 übertragen und zwischengespeichert. Dort werden die Daten im Hinblick auf eine erhöhte Datensicherheit für den Rechner 5, 7, für den die Daten bestimmt sind, sicherheitstechnisch verarbeitet. So können die Daten bspw. auf Viren überprüft und mögliche Viren aus den Daten vor der Weiterleitung entfernt werden, oder eine Weiterleitung von virenverseuchten Daten wird komplett verhindert. Nach der sicherheitstechnischen Verarbeitung und nach einem Umschalten des Schaltelements 9 bzw. des mechanischen Schalters 10 werden die Daten aus dem dritten Rechengerät 12 ausgelesen und an den bestimmungsgemäßen Rechner 5, 7 weitergeleitet.

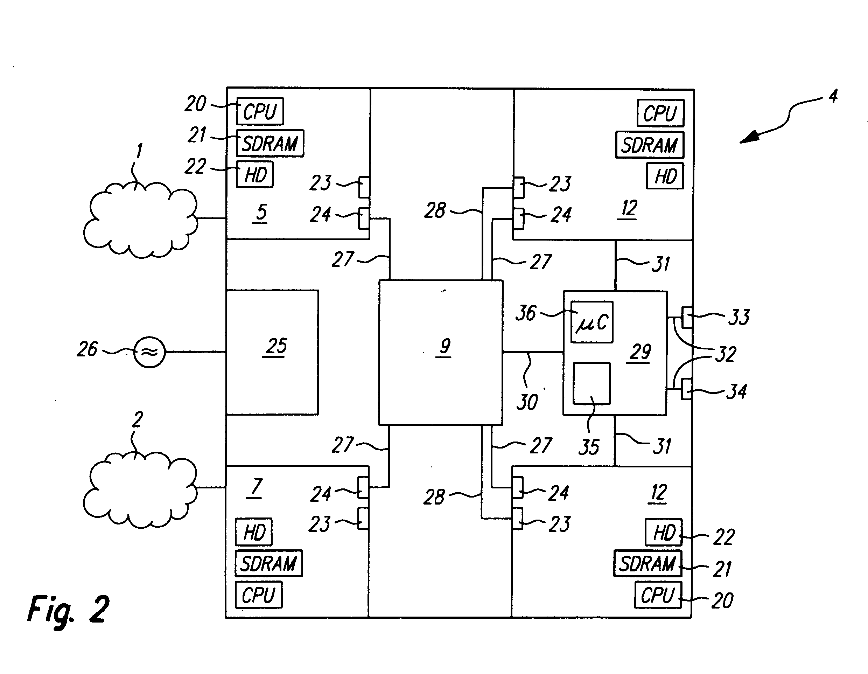

In Figur 2 ist das erfindungsgemäße Schleusenelement 4 im Detail dargestellt. Das Schleusenelement 4 umfasst ein Chassis, in dem verschiedene Komponenten des Schleusenelements 4 als Einsteckkarten angeordnet werden können. Figur 2 zeigt lediglich den schematischen Aufbau und entspricht nicht der Anordnung der verschiedenen Einsteckkarten in dem Chassis. Das in Figur 2 dargestellte und nachfolgend erläuterte Ausführungsbeispiel des Schleusenelements 4 umfasst vier sogenannte single board computer (SBC)-Systeme, die jeweils einen Mikroprozessor (CPU) 20, einen Arbeitsspeicher (SDRAM) 21 und einen Massenspeicher (HD) 22 in Form eines Festplattenspeichers, umfassen, auf. Außerdem verfügt jedes der SBC-Systeme über eine parallele Schnittstelle 23 und eine Netzwerkkarte 24. Die SBC-Systeme entsprechen den Rechengeräten 5, 7, 12, wobei das in Figur 2 dargestellte Ausführungsbeispiel 2 dritte Rechengeräte 12 und somit auch zwei Schleusenkammern 11 und zwei mechanische Schalter 10 umfasst.

Das SBC-System oben links entspricht dem ersten Rechengerät 5, das mit dem ersten Netzwerk 1 in Verbindung steht. Das SBC-System unten links in Figur 2 entspricht dem zweiten Rechengerät 7, das mit dem zweiten Netzwerk 2 in Verbindung steht. Die beiden SBC-Systeme rechts in Figur 2 entsprechen jeweils einem dritten Rechengerät 12. Der Vorteil der in Figur 2 dargestellten Ausführungsform mit zwei Schleusenkammern 11, zwei dritten Rechengeräten 12 und zwei mechanischen Schaltern 10 ist darin zu sehen, dass Daten nahezu zeitgleich in beide Richtungen über das Schleusenelement 4 übertragen werden können. Beide mechanische Schalter 10 des Schaltelements 9 können zwischen den zwei genannten Stellungen hin- und hergeschaltet werden. In der ersten Stellung steht die dem Schalter 10 zugeordnete Schleusenkammer 11 mit dem ersten Netzwerk 1 in Verbindung und ist die Verbindung zu dem zweiten Netzwerk 2 auf Hardware-Ebene unterbrochen. In der zweiten Stellung des mechanischen Schalters 10 steht die dem Schalter 10 zugeordnete Schleusenkammer 11 mit dem zweiten Netzwerk 2 in Verbindung und ist die Verbindung zu dem ersten Netzwerk 1 auf Hardware-Ebene unterbrochen. Bei dem in Figur 2 dargestellten Ausführungsbeispiel werden die mechanischen Schalter 10 des Schaltelements 9 nun genau entgegengesetzt angesteuert, so dass wenn ein Schalter 10 in der ersten Stellung ist, sich der andere Stellung 10 in der zweiten Stellung befindet und umgekehrt. Auf diese Weise können zur gleichen Zeit Daten aus dem ersten Netzwerk 1 in die erste Schleusenkammer 11 und aus dem zweiten Netzwerk 2 in die zweiten Schleusenkammer 11 übertragen werden. Nach dem Umschalten der Schalter 10 können dann ebenfalls zeitgleich die Daten aus der ersten Schleusenkammer 11 an das zweite Netzwerk 2 und die Daten aus der zweiten Schleusenkammer 11 an das erste Netzwerk 1 übertragen werden. Selbstverständlich ist es theoretisch auch denkbar, die beiden mechanischen Schalter 10 parallel anzusteuern, so dass die beiden Schleusenkammern 11 bzw. die beiden darin angeordneten dritten Rechengeräte 12 zeitgleich mit dem ersten Netzwerk 1 bzw. dem darin angeordneten ersten Rechengerät 5 und nach dem Umschalten ebenfalls zeitgleich mit dem zweiten Netzwerk 2 bzw. dem darin angeordneten zweiten Rechengerät 7 verbunden sind. Auf diesen Ansatz wird hier aber nicht näher eingegangen.

Das Schleusenelement 4 verfügt außerdem über eine Spannungsversorgung 25, die einerseits an ein Spannungsnetz 26 und andererseits zur Energieversorgung an sämtliche Komponenten des Schleusenelements 4 angeschlossen ist. Die Anschlussleitungen zwischen der Spannungsversorgung 25 und den Komponenten des Schleusenelements 4 sind der besseren Übersichtlichkeit halber in Figur 2 nicht dargestellt.

Das Schaltelement 9 ist bei dem in Figur 2 dargestellten Ausführungsbeispiel als eine gedruckte Leiterplatte, ein sogenanntes printed circuit board (PCB) 9 ausgebildet. Das Schaltelement 9 steht über eine Datenübertragungsverbindung in Form eines Netzwerkkabels 27 mit sämtlichen SBC-Systemen 5, 7 und 12 in Verbindung, wobei das Netzwerkkabel 27 an die Netzwerkkarten 24 der SBC-Systeme 5, 7, 12 angeschlossen ist. Über die Netzwerkkabel 27 werden die über das Schleusenelement 4 zu übertragenden Daten in Abhängigkeit von der Stellung der mechanischen Schalter 10 des Schaltelements 9 zwischen bestimmten SBC-Systemen 5, 7, 12 übertragen.

Des Weiteren steht das Schaltelement 9 über Statusverbindungen in Form paralleler 9-poliger Kabel 28 mit den SBC-Systemen 12 in Verbindung, wobei die parallelen Kabel 28 an die parallelen Schnittstellen 23 der SBC-Systeme 12 angeschlossen sind. Zwischen den SBC-Systemen 5, 7 und dem Schaltelement 9 sind in dem dargestellten Ausführungsbeispiel aus Sicherheitsgründen (um einen Angriff auf das Schleusenelement 4 bzw. das Schaltelement 9 oder eine Manipulation der Elemente 4, 9 von außerhalb zu verhindern) keine Statusverbindungen 28 vorgesehen. Über die parallelen Kabel 28 erhalten die SBC-Systeme 12 Informationen über den aktuellen Zustand des Schaltelements 9, insbesondere über den aktuellen Schaltzustand der mechanischen Schalter 10.

Schließlich umfasst das Schleusenelement 4 eine ebenfalls als gedruckte Leiterplatte (PCB) ausgebildete Einheit 29, die über eine Signalisierungsleitung 30 an das Schaltelement 9 angeschlossen ist. Über die Signalisierungsleitung 30 können Signale z. B. nach dem sogenannten Firewire-Standard übertragen werden. Aus diesem Grund wird die Signalisierungsleitung 30 in dem in Figur 2 dargestellten Ausführungsbeispiel auch als Firewire-Kabel bezeichnet.

Außerdem ist die Einheit 29 über zwei serielle 9-polige Kabel 31 an die beiden dritten Rechengeräte 12 angeschlossen. Über die seriellen Kabel 31 wird der aktuelle Zustand der Schleusenkammer 11 bzw. der dritten Rechengeräte 12 an die Einheit 29 übertragen. Des Weiteren sind zwei serielle 15-polige Kabel 32 vorgesehen, über die die Einheit 29 mit von außerhalb des Schleusenelements 4 einsehbaren Leuchtdioden 33, 34 in Verbindung steht. Mit Hilfe der Leuchtdioden 33, 34 wird einem Anwender der aktuelle Zustand des Schleusenelements 4, insbesondere der aktuelle Zustand des Schaltelements 9 bzw. der mechanischen Schalter 10 und der Schleusenkammern 11 bzw. der dritten Rechengeräte 12 mitgeteilt.

Schließlich gibt es bei dem Schleusenelement 4 noch vier IDE-Kabel, mit denen die Festplatten (HD) 22 der SBC-Systeme 5, 7, 12 mit der Hauptplatine des jeweiligen SBC-Systems 5, 7, 12, dem sogenannten SBC-Motherboard, verbunden sind, was in Figur 2 jedoch nicht explizit dargestellt ist.

Die Einheit 29 hat insbesondere zwei Funktionen: Zum einen soll sie Informationssignale zur Ansteuerung der Leuchtdioden 33, 34 generieren und über die seriellen Kabel 32 an diese übermitteln, um Anwender über den aktuellen Status des Schleusenelements 4 zu informieren. Zum anderen wird in der Einheit 29 ein Signal, in dem vorliegenden Ausführungsbeispiel ein TTL-Signal, zur Ansteuerung des Schaltelements 9 bzw. der mechanischen Schalter 10 generiert und über das Firewire-Kabel 30 an diese übermittelt. Das Ansteuersignal für das Schaltelement 9 ist beispielsweise ein in der Einheit 29 generiertes Taktsignal.

Zum Generieren des Ansteuersignals ist in der Einheit 29 ein Hardware-Zeitgeber 35, ein sogenannter Hardware-Timer, vorgesehen, der unabhängig von dem aktuellen Zustand der Komponenten des Schleusenelements 4, insbesondere unabhängig von den dritten Rechengeräten 12, die Umschaltzeitpunkte für das Schaltelement 9 bzw. die mechanischen Schalter 10 vorgibt. Außerdem ist ein Mikro-Controller 36, in dem vorliegenden Ausführungsbeispiel vom Typ PIC..., beispielsweise PIC16C63A oder PIC12C509A, von der Firma Microchip Technology Inc., 2355 West Chandler Boulevard, Chandler, Arizona, USA 85224-6199 vorgesehen, auf dem u. a. ein einfaches Assembler-Programm ablauffähig ist. Bestimmte Variablen oder Parameter für den Hardware-Zeitgeber 35 können in dem Assembler-Programm eingestellt werden, so dass der Hardware-Zeitgeber 35 ein gewünschtes Ansteuersignal (TTL-Signal) zum Triggern des Schaltelements 9 erzeugt. Diese Initialisierung und Kalibrierung des Hardware-Zeitgebers 35 durch Anpassen der Parameter bzw. Variablen in dem Assembler-Programm kann nur ein einziges Mal erfolgen, da ein interner Speicher des Mikro-Controllers 36 lediglich eine einmalige Programmierung. Eine nachfolgende Änderung der Variablen bzw. Parameter durch Umprogrammieren des internen Speichers des Mikro-Controllers 36 ist nicht möglich. Dies ist bauartbedingt bei dem verwendeten Typ von Mikro-Controller 36 vorgegeben. Außer dem genannten Mikro-Controller-Typ gibt es noch andere Typen, die sich ebenfalls zum Einsatz in einem erfindungsgemäßen Schleusenelement 4 eignen würden, hier aber nicht explizit genannt sind. Vorzugsweise erfolgt die Kalibrierung und Initialisierung des Hardware-Zeitgebers 35 beim Hersteller des Schleusenelements 4 noch bevor das Schleusenelement 4 an den Kunden ausgeliefert wird (prior to shipment and use). Durch den Einsatz eines Mikro-Controllers 36 mit einem nur ein einziges Mal programmierbaren internen Speicher geht zwar Flexibilität verloren, es stellt aber einen enormen Sicherheitsgewinn dar, da eine Manipulation des Zeitgebers 35 bzw. des Schaltelements 9 durch einen Angriff aus einem der Netzwerke 1, 2 ausgeschlossen ist.

Obwohl bei dem erfindungsgemäßen Schleusenelement 4 das auf dem Mikro-Controller 36 der Einheit 29 ablaufende Assembler-Programm zur Initialisierung und/ oder Kalibrierung des Zeitgebers 35 verwendet wird, handelt es sich doch um einen reinen Hardware-Zeitgeber 35, der von außerhalb des Schleusenelements 4 nicht manipulierbar ist. Das Assembler-Programm dient nämlich lediglich dazu, eine bestimmte Anzahl (beispielsweise vier) Variablen oder Parameter des Hardware-Timers 35 einstellen zu können, so dass das Schaltelement 9 bzw. die mechanischen Schalter 10 eine gewünschte, vorgebbare Schaltcharakteristik, insbesondere bestimmte Umschaltzeiten, aufweisen. Die gewünschten Werte für die Variablen bzw. Parameter werden in dem Assembler-Programm eingestellt und das überarbeitete Programm in den internen Speicher des Mikro-Controllers 36 gespeichert. Danach ist die Initialisierung bzw. Kalibrierung abgeschlossen. Im Anschluss daran ist eine Umprogrammierung des Mikro-Controllers 36 zur Veränderung der Taktzeiten des Hardware-Timers 35 und der Schaltcharakteristik des Schaltelements 9 überhaupt nicht bzw. nur mit einem extrem hohen Aufwand möglich. Jedenfalls ist eine Umprogrammierung des Mikro-Controllers 36 im Rahmen eines Angriffs von außerhalb des Schleusenelements 4 mit Sicherheit ausgeschlossen.

Die in dem in Figur 2 dargestellten Schleusenelement 4 gewählte Ausführungsform, bei der der Hardware-Zeitgeber 35 außerhalb des Schaltelements 9 in der Einheit 29 angeordnet ist, hat den Vorteil, dass das Schaltelement 9 völlig frei von zusätzlicher Hardware und Software gehalten wird und tatsächlich nur als unmanipulierbares ausführendes Schaltorgan dient. Es ist jedoch selbstverständlich möglich, den Hardware-Zeitgeber 35 und/oder den Mikro-Controller 36 innerhalb des Schaltelementes 9 anzuordnen. In diesem Fall würden über das Firewire-Kabel 30 keine Ansteuersignale mehr für das Schaltelement 9, sondern in umgekehrter Richtung Informationen über den aktuellen Zustand des Schaltelements 9 bzw. der mechanischen Schalter 10 an die Einheit 29 übermittelt, so dass diese die Leuchtdioden 33, 34 entsprechend ansteuern kann. Falls auf eine Information der Anwender über den aktuellen Zustand des Schleusenelements 4 über die beiden Leuchtdioden 33, 34 verzichtet werden kann, könnte dann auf die Einheit 29, das Firewire-Kabel 30, die seriellen Kabel 31 und die seriellen Kabel 32 sowie auf die Leuchtdioden 33, 34 völlig verzichtet werden.

Der Hardware-Timer 35 ist in der Regel aus Platz- und Kostengründen integraler Bestandteil des Mikro-Controllers 36. In Figur 2 sind beide Komponenten 35, 36 lediglich zum besseren Verständnis der Erfindung als separate Bauteile dargestellt. Des weiteren ist es möglich, nicht nur - wie in Figur 2 dargestellt - einen Mikro-Controller 36, sondern mehrere Mikro-Controller, beispielsweise so viele Mikro-Controller wie das Schleusenelement 4 dritte Rechengeräte 12 aufweist, vorzusehen.

Zur Erfüllung der sogenannten Display-Funktion (Ausgabe des Status des Schaltelements 9 und der Rechengeräte 12 über die LEDs 33, 34) kann in der Einheit 29 mindestes ein zusätzlicher Mikrocontroller (beispielsweise vom Typ PIC16C63A) vorgesehen sein, der in Figur 2 jedoch nicht dargestellt ist. Vorzugsweise sind zwei zusätzliche Mikro-Controller für die Display-Funktion vorgesehen.

Während des Betriebs des Schleusenelements 4 läuft auf dem Mikroprozessor (CPU) 20 eines jeden der SBC-Systeme 5, 7, 12 ein Computerprogramm ab, welches die Datenübertragung zu den, je nach Stellung der mechanischen Schalter 10, unterschiedlichen, anderen SBC-Systemen steuert. Das Computerprogramm ist beispielsweise auf der Festplatte (HD) 22 abgespeichert und wird nach dem Einschalten des Schleusenelements 4 in den Arbeitsspeicher 21 und von dort entweder als Ganzes oder befehlsweise zur Abarbeitung in dem Prozessor 20 übertragen.

Beispielsweise muss das auf einem der dritten Rechengeräte 12 ablaufende Computerprogramm nach der hardwaremäßigen Herstellung einer Verbindung zwischen dem eigenen SBC-System 12 und dem SBC-System 5 oder dem SBC-System 7 durch den mechanischen Schalter 10 des Schaltelements 9 im Zusammenspiel mit dem auf dem anderen Rechengerät 5 oder 7 ablaufenden Computerprogramm Vorkehrungen dafür treffen, dass über die hardwaremäßig hergestellte Verbindung auch tatsächlich Daten übertragen werden können. Das bedeutet also, dass die hardwaremäßigen Voraussetzungen für eine Datenübertragung zwischen den Rechengeräten 12 und 5 oder 7 durch das Schaltelement 9 bzw. die mechanischen Schalter 10 getroffen werden. Die darauf basierenden kommunikationstechnischen Voraussetzungen werden jedoch von den auf den einzelnen Rechengeräten 12 ablaufenden Computerprogrammen initiiert und im Zusammenspiel mit den auf den Rechengeräten 5 oder 7 ablaufenden Computerprogrammen erfüllt. Auch der eigentliche Datenaustausch zwischen den Rechengeräten 12 und 5 oder 7 erfolgt mit Hilfe der Computerprogramme. Der Aufbau der Kommunikationsverbindung zwischen den Rechengeräten 12 und 5 oder 7 wird von dem auf den Rechengeräten 12 ablaufenden Computerprogramm initiiert, weil dieses wesentlich besser vor Angriffs- oder Manipulationsversuchen von außerhalb geschützt ist als das auf den Rechengeräten 5 oder 7 ablaufende Computerprogramm.

Schließlich sind die auf dem ersten Rechengerät 5 und dem zweiten Rechengerät 7 ablaufenden Computerprogramme auch für eine Kommunikation zu den Anwendungen aus den Netzwerken 1, 2 verantwortlich. Durch die Computerprogramme muss der tatsächliche Verbindungszustand zwischen dem ersten Rechengerät 5 und dem zweiten Rechengerät 7 bzw. zwischen dem ersten Netzwerk 1 und dem zweiten Netzwerk 2 (aufgebaut oder unterbrochen) versteckt werden, so dass weder für Anwender noch für Anwendungsprogramme die tatsächlich vorhandene Unterbrechung der Netzwerkverbindung nicht sichtbar ist. Nur dann geben die Anwendungsprogramme keine Fehlermeldung aus und arbeiten ordnungsgemäß als würden sie Daten über eine ganz normale Netzwerkverbindung ohne ein dazwischen geschaltetes Schleusenelement 4 übertragen.

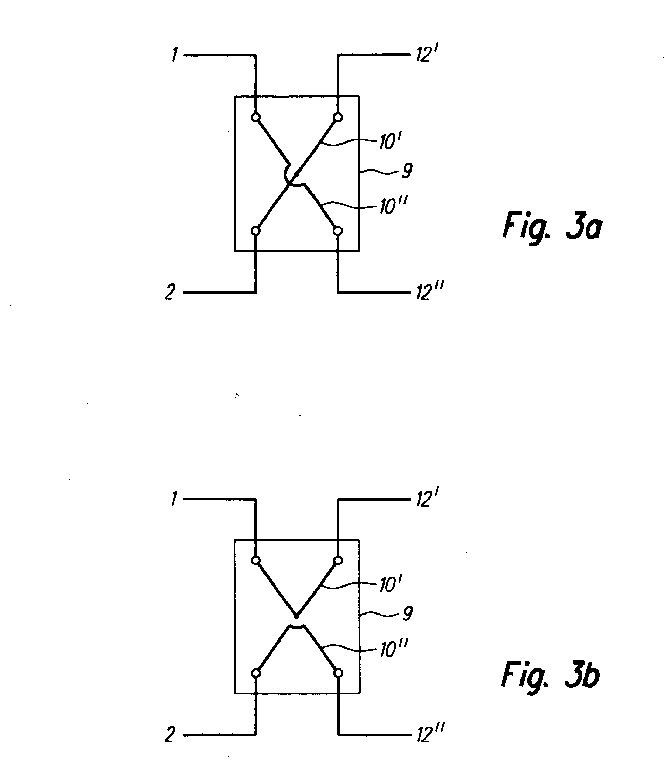

In Figur 3a ist das Schaltelement 9 aus Figur 2 mit den beiden mechanischen Schaltern 10 im Detail in einer ersten Stellung dargestellt. Dabei ist der erste Schalter 10' in einer Stellung, in der die erste Schleusenkammer 11 bzw. das darin angeordnete dritte Rechengerät 12' mit dem zweiten Netzwerk 2 verbunden ist. Der zweite mechanische Schalter 10" befindet sich dagegen in einer Stellung, in der die zweite Schleusenkammer 11 bzw. das darin angeordnete dritte Rechengerät 12" mit dem ersten Netzwerk 1 in Verbindung steht. Wenn nun das Schaltelement 9 auf Befehl des Zeitgebers 35 umgeschaltet wird, kommen die mechanischen Schalter 10' und 10" in die in Figur 3b dargestellte Stellung. Dabei befindet sich der erste Schalter 10' in einer Stellung, in der das in der ersten Schleusenkammer 11 angeordnete dritte Rechengerät 12' mit dem ersten Netzwerk 1 in Verbindung steht. Der zweite Schalter 10" befindet sich in einer Stellung, in der das in der zweiten Schleusenkammer 11 angeordnete dritte Rechengerät 12" mit dem zweiten Netzwerk 2 in Verbindung steht.

## Patentansprüche

1. In einer Netzwerkverbindung (3) zwischen einem ersten Netzwerk (1) und einem zweiten Netzwerk (2) angeordnetes Schleusenelement (4), über das eine Datenübertragung zwischen den Netzwerken (1, 2) erfolgt, wobei das Schleusenelement (4) eine permanente Unterbrechung der Netzwerkverbindung (3) auf Hardware-Ebene sicherstellt, und das mindestens eine Schleusenkammer (11) zum Zwischenspeichern von zu übertragenden Daten aufweist, wobei die Schleusenkammer (11) zwischen zwei Stellungen umschaltbar ist, nämlich einer ersten Stellung, in der die Kammer (11) mit dem ersten Netzwerk (1) in Verbindung steht und die Verbindung zu dem zweiten Netzwerk (2) auf Hardware-Ebene unterbrochen ist, und einer zweiten Stellung, in der die Kammer (11) mit dem zweiten Netzwerk (2) in Verbindung steht und die Verbindung zu dem ersten Netzwerk (1) auf Hardware-Ebene unterbrochen ist, und wobei das Schleusenelement (4) ein Schaltelement (9) aufweist, das die Schleusenkammer (11) zu vorgebbaren Zeitpunkten zwischen den zwei Stellungen umschaltet, **dadurch gekennzeichnet, dass** das Schleusenelement (4) einen Hardware-Zeitgeber (35) aufweist, der die Umschaltzeitpunkte des Schaltelements (9) unabhängig von dem Zustand des übrigen Schleusenelements (4) vorgibt.

2. Schleusenelement (4) nach Anspruch 1, **dadurch gekennzeichnet, dass** das Schaltelement (9) mindestens einen mechanischen Schalter (10) aufweist, wobei jeder Schleusenkammer (11) ein Schalter (10) zugeordnet ist, und der Hardware-Zeitgeber (35) die Umschaltzeitpunkte des mindestens einen mechanischen Schalters (10) vorgibt.

3. Schleusenelement (4) nach Anspruch 1 oder 2, **dadurch gekennzeichnet, dass** das Schleusenelement (4) mindestens drei Rechengeräte (5, 7, 12) umfasst, wobei ein erstes Rechengerät (5) mit dem ersten Netzwerk (1) und ein zweites Rechengerät (7) mit dem zweiten Netzwerk (2) in Verbindung steht und je Schleusenkammer (11) mindestens ein drittes Rechengerät (12) vorgesehen ist, das über den mechanischen Schalter (10) der Schleusenkammer (11) mit dem ersten Rechengerät (5) oder mit dem zweiten Rechengerät (7) in Verbindung bringbar ist.

4. Schleusenelement (4) nach Anspruch 3, **dadurch gekennzeichnet, dass** der Hardware-Zeitgeber (35) die Umschaltzeitpunkte unabhängig von dem Zustand des oder jeden dritten Rechengeräts (12) vorgibt.

5. Schleusenelement (4) nach Anspruch 3 oder 4, **dadurch gekennzeichnet, dass** jedes der Rechengeräte (5, 7, 12) einen Prozessor (20), einen Arbeitsspeicher (21), einen Massenspeicher (22) und ein zum Ablauf auf dem Rechengerät (5; 7; 12) vorgesehenes Computerprogramm umfasst, welches die Datenübertragung zwischen dem ersten Rechengerät (5) und dem mindestens einen dritten Rechengerät (12) und zwischen dem zweiten Rechengerät (7) und dem mindestens einen dritten Rechengerät (12) steuert.

6. Schleusenelement (4) nach Anspruch 5, **dadurch gekennzeichnet, dass** die Rechengeräte (5, 7, 12) jeweils über eine Datenübertragungsverbindung (27) und eine Statusverbindung (28) mit dem Schaltelement (9) in Verbindung stehen.

7. Schleusenelement (4) nach Anspruch 5 oder 6, **dadurch gekennzeichnet, dass** das Computerprogramm die Datenübertragung zwischen dem ersten Rechengerät (5) und dem mindestens einen dritten Rechengerät (12) und zwischen dem zweiten Rechengerät (7) und dem mindestens einen dritten Rechengerät (12) in Abhängigkeit von dem aktuellen Schaltstatus des Schaltelements (9) steuert.

8. Schleusenelement (4) nach einem der Ansprüche 5 bis 7, **dadurch gekennzeichnet, dass** das Computerprogramm die Datenübertragung zwischen dem ersten Rechengerät (5) und dem mindestens einen dritten Rechengerät (12) und zwischen dem zweiten Rechengerät (7) und dem mindestens einen dritten Rechengerät (12) für Anwender und Anwendungen transparent steuert.

9. Schleusenelement (4) nach einem der Ansprüche 1 bis 8, **dadurch gekennzeichnet, dass** das Schleusenelement (4) zwei Schleusenkammern (11) und das Schaltelement (9) zwei mechanische Schalter (10) aufweist, wobei die zwei mechanischen Schalter (10) zeitsynchron zueinander umschalten, so dass zu jedem Zeitpunkt eines der dritten Rechengeräte (12) mit dem ersten Rechengerät (5) und das andere dritte Rechengerät (12) mit dem zweiten Rechengerät (7) in Verbindung steht.

10. Verfahren zur Übertragung von Daten zwischen einem ersten Netzwerk (1) und einem zweiten Netzwerk (2) über eine Netzwerkverbindung (3) und ein darin angeordnetes Schleusenelement (4), wobei die Netzwerkverbindung (3) durch das Schleusenelement (4) auf Hardware-Ebene permanent unterbrochen ist und das Schleusenelement (4) mindestens eine Schleusenkammer (11) zum Zwischenspeichern von zu übertragenden Daten aufweist, wobei die Schleusenkammer (11) während der Datenübertragung zwischen zwei Stellungen umgeschaltet wird, nämlich einer ersten Stellung, in der die Kammer (11) mit dem ersten Netzwerk (1) in Verbindung steht und die Verbindung zu dem zweiten Netzwerk (2) auf Hardware-Ebene unterbrochen ist, und einer zweiten Stellung, in der die Kammer (11) mit dem zweiten Netzwerk (2) in Verbindung steht und die Verbindung zu dem ersten Netzwerk (1) auf Hardware-Ebene unterbrochen ist, und wobei die Schleusenkammer (11) von einem Schaltelement (9) des Schleusenelements (4) zu vorgebbaren Zeitpunkten zwischen den zwei Stellungen umgeschaltet wird, **dadurch gekennzeichnet, dass** die Umschaltzeitpunkte des Schaltelements (9) unabhängig von dem Zustand des übrigen Schleusenelements (4) gesteuert werden.

11. Verfahren nach Anspruch 10, **dadurch gekennzeichnet, dass** in jeder Schleusenkammer (11) mindestens ein drittes Rechengerät (12) angeordnet ist und die Umschaltzeitpunkte des Schaltelements (9) unabhängig von dem Zustand des mindestens einen dritten Rechengeräts (12) gesteuert werden.

12. Verfahren nach Anspruch 10, **dadurch gekennzeichnet, dass** die Umschaltzeitpunkte des Schaltelements (9) durch einen Hardware-Zeitgeber (35) des Schleusenelements (4) vorgegeben werden.
